# EUROPEAN PATENT SPECIFICATION

(11) **EP 0 872 949 B1**
(45) Date of publication and mention of the grant of the patent: **17.09.2003**
(21) Application number: 98106422.3
(22) Date of filing: 08.04.1998
(51) Int. Cl.: H02P 6/18, H02P 6/22

(54) **Method and arrangement for starting and running a single-phase synchronous permanent-magnet motor**
Verfahren und Vorrichtung zum Anlassen und zur Operation eines Einphasensynchrondauermagnetmotors
Procédé et dispositif pour le démarrage et le fonctionnement d'un moteur synchrone monophasé à aimants permanents

(30) Priority: 18.04.1997 IT MI970913
(43) Date of publication of application: 21.10.1998
(73) Proprietor: SISME IMMOBILIARE S.p.A., 22077 Olgiate Comasco (Como) (IT)
(72) Inventor: Ostovic, Vlado, 6940 Weinheim (IT); Oljaca, Miroslav, 21040 Gerenzano (Varese) (IT); Greco, Bruno, 21020 Casciago (Varese) (IT)
(74) Representative: Ripamonti, Enrico, Dr. Ing.

(56) References cited:
- EP-A- 0 682 404
- EP-A- 0 713 286
- DE-A- 4 122 109
- US-A- 5 036 264
- US-A- 5 144 564

## Description

This invention relates to an arrangement based on: a) a single-phase synchronous motor with a permanent-magnet rotor and two not necessarily equal windings differing in phase by 90 electrical degrees, particularly for operating circulation pumps for dishwashers or the like or for applications which require low power and involve low inertial loads, and b) an electronic circuit for driving the motor via static switches.

From previous Italian patent applications in the name of the present applicant, single-phase synchronous motors with a permanent-magnet rotor are known, in particular motors with a single winding formed by solenoid coils having a special configuration of the relative air gap, and associated with one or more rotor position sensors, these latter enabling the motor to be started in the required direction and its rotational speed to be controlled by a suitable electronic driver circuit (see also EP 0682404).

US 5.144.564 refers specifically to permanent magnet motors having at least three stator windings and teaches a specific methodology permitting elimination of a rotor position sensor.

An object of this invention is to provide an arrangement provided with the initially specified motor which enables the motor to be started and operated without position sensors for the relative rotors.

A further object of the invention is to provide an arrangement in which the motor has a homogeneous air gap and a magnetic lamination of circular or rectangular shape or in any event symmetrical about the axis of rotation so as to reduce the overall motor size, with corresponding influence on the overall size of the motor/pump unit in the case of such an installation, and to simplify its assembly into the motor using the motor/pump unit.

A further object of the invention is to provide an arrangement which enables a synchronization speed to be chosen for the motor which is different from that related to mains frequency, within reasonable limits.

An important object of the invention is to provide a method for handling the motor start and operation.

A further object of the invention is to provide a method for identifying the angular position of the rotor without the aid of sensors.

These and further objects of the invention which will be more apparent from the detailed description given hereinafter are attained by an arrangement and a method in accordance with the teachings of the accompanying claims. A precise definition of the invention is given in the claims.

The invention is described by way of non-limiting example with reference to some preferred embodiments thereof, illustrated on the accompanying drawings, on which:
Figure 1 is a schematic view of an electric motor according to the invention;
Figure 2 is a schematic view of the arrangement of the invention;
Figure 3 is a schematic view of a detail of the arrangement of Figure 2;
Figure 4 is a schematic view of a simplified modification of that. shown in Figure 3;
Figure 5a shows the variation of the current in the stator windings of the electric motor during its first starting stage (1st stage);
Figure 5b schematically shows the electric motor at the commencement of the starting stage;
Figure 6a shows the current variation in the motor windings at the commencement of the second motor starting stage;
Figure 6b schematically shows the electric motor at the commencement of this starting stage;
Figure 7a shows the current variation in the motor windings at the commencement of the third starting stage;
Figure 7b schematically shows the electric motor at the commencement of said third starting stage;
Figure 8a shows the current variation in the motor windings at the commencement of the fourth starting stage; and
Figure 8b schematically shows the electric motor at the commencement of said fourth starting stage.

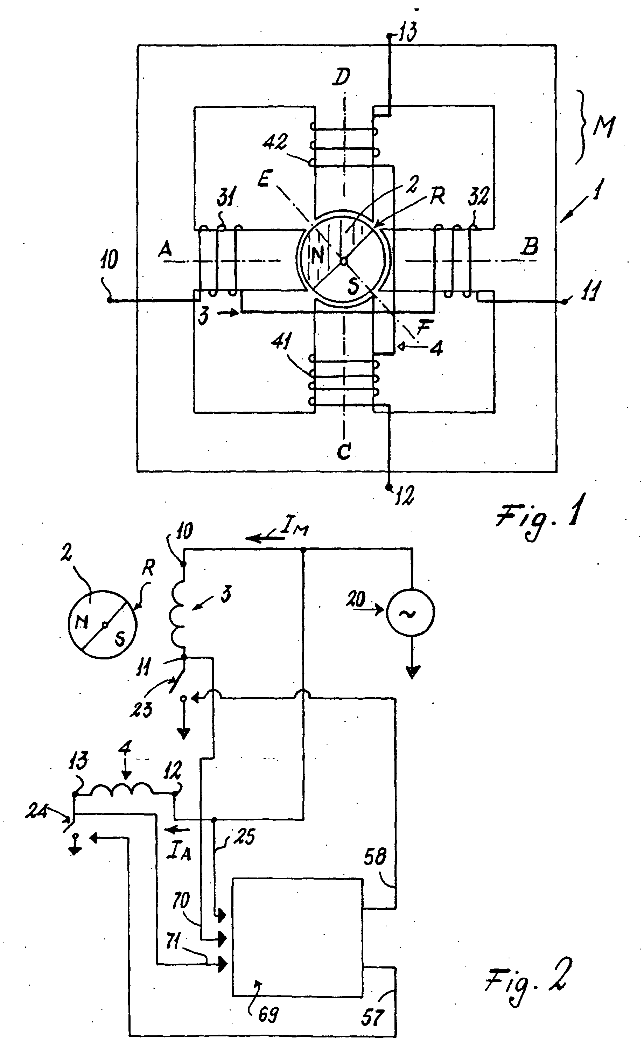

Figure 1 shows one of the possible embodiments of the electric motor M which forms a fundamental part of the arrangement of the invention. For reasons of simplicity, but without this constituting a limitation on the invention, the motor is shown in the salient pole configuration, namely in the two-pole version. The motor M comprises a stator pack 1 within which there is a rotor R formed from permanent magnets 2, the polarities of which are indicated by N and S. On the salient poles there are two windings 3, 4 relative to the motor phases, one (3) known as the main and the other (4) as the auxiliary for ease of description. The main winding 3 is divided into two parts 31 and 32 which are located on the two salient poles having the same magnetic axis A-B, and lies between the terminals 10 and 11.

The auxiliary winding 4, lying between the terminals 12 and 13, is also divided into two parts 41, 42, which are located on the two poles having the same magnetic axis D-C perpendicular to the preceding.

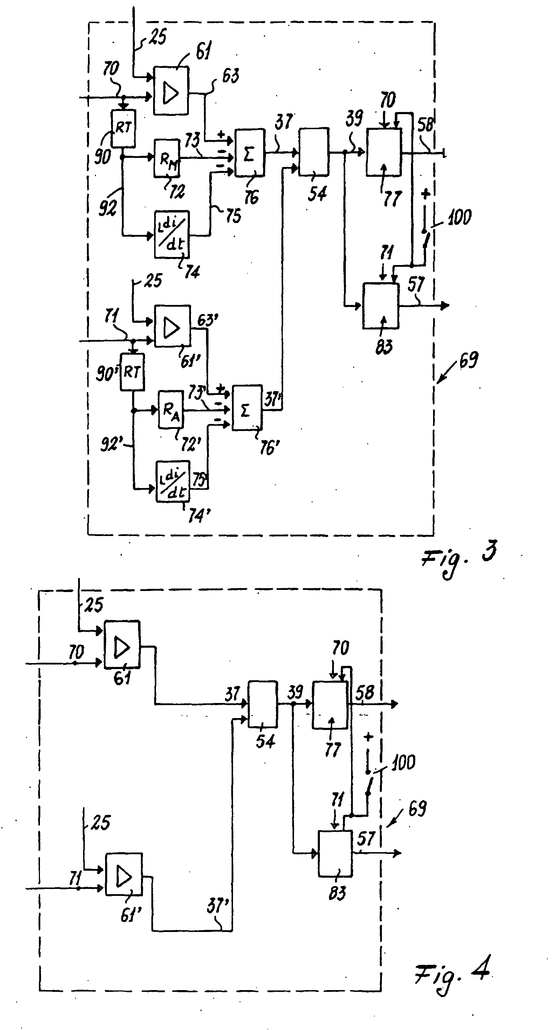

As can be seen from the scheme of Figure 2, in which the motor M is shown schematically in the form of its rotor R and its two windings 3, 4, both the terminal 10 and the terminal 12 are connected to a single-phase a.c. electricity source, for example the mains electricity, indicated by 20, whereas the terminals 11 and 12 are connected to the mains return line via respective static switches 23, 24 (for example triacs) shown for simplicity in the form of mechanical switches. The source 20 is also connected to an electronic control module or block (for example a microprocessor) 69 via the signal line 25. The terminals 11 and 13 are connected respectively to the electronic block 69 via the signal lines 70 and 71.

Outputs 57 and 58 of said block 69 drive the static switches 23, 24 respectively.

The voltage which, when the motor is operating, is present between the signal lines 25 and 70 has two components: the first component is induced by the flux due to the current Im circulating through the main winding 3, the second component being induced by the flux of the rotor R and being proportional to the angular velocity and to the angular position (variable with time) of the rotor.

Likewise, the considerations given in the preceding paragraph are valid for the voltages present in the signal lines 25 and 71 and hence relating to the auxiliary winding. It should be noted that the second component of the voltage induced by the rotor in the auxiliary winding 4 differs in phase by 90° from the voltage measured across the main winding. This phase displacement is due to the 90° spatial displacement of the magnetic axes A-B and C-D, see Figure 1.

As the static switches naturally produce a voltage drop and this voltage drop is proportional to the current which flows through them (and which flows through the windings), it is not necessary to measure this current directly, this current, together with the voltage data of the two preceding paragraphs, enabling the position of the rotor R to be calculated without using sensors, for example Hall effect sensors. The voltage drop across the static switches is that present at the signal lines 70, 71.

The three signals present at the lines 25, 70 and 71 when processed in the electronic control block 69 are sufficient to operate the static switches 23 and 24 via the control signals of the lines 57 and 58 and to ensure starting (in the required direction) and operation of the motor without the aid of other signals originating from any type of position sensor for the rotor R (for example Hall effect sensors, signal coils etc.), as will be apparent from the ensuing description.

The processing of the three aforesaid signals is implemented, as stated, in the electronic block 69, and is described in relation to Figure 3, noting that the processing of the signals of one of the windings 3, 4 corresponds exactly to that of the other.

For this reason the ensuing description is limited to the processing of the signals of the winding 3, in Figure 3 there being used the same reference numerals plus an apostrophe to identify parts or signals relative to the winding 4.

The signals of the two lines 25 and 70, representative of the voltage across the winding 3, are differentiated in the block 61, the output of which is a signal 63 which is proportional to the voltage applied to the winding 3 or, at the times in which the static switch 23 is open, to the voltage induced in the winding 3 by the rotation of the rotor R.

The signals 73 and 75 are subtracted from the signal 63 in an arithmetical unit 76. The two signals 73 and 75 are obtained as follows. The voltage signal of the line 70 is divided in the block 90 by the value of the resistance Rt of the static switch 23 to obtain the value of the current signal 92 through the winding 3. By multiplying the signal 92 (ie the current through the winding) by the ohmic value of the winding resistance R_{M} in the block 72, the said signal 73 relative to the resistive voltage drop is obtained. The signal 75 is obtained by multiplying (in the block 74) the derivative of the current 92 by the inductance L of the winding. Knowing the voltage (signal 63) applied to the winding 3 and the two voltage drops (signals 73 and 75), the voltage induced in the winding 3 by the rotation of the rotor R, represented by the output signal 37, is determined in the arithmetic unit 76. A like operation is performed on the signal of the line 71 and on the signal 63' to obtain the signal 37' relative to the auxiliary winding 4.

As the voltages induced by the rotation of the rotor R in the two windings 3, 4 are proportional to the rotational speed and to the angular position of the rotor, by processing the relative signals 37, 37' in the block 54 a signal 39 is obtained which identifies the angular position of the rotor. The blocks 77 and 83 operate as described in Italian patent application MI94A00941, relative to the processing of two quantities, in this case 70 and 39 or 71 and 39.

Specifically, the voltage signal 70 at the static switch 23 is compared in the block 77 with the angular position (signal 39) of the rotor. When the voltage 70 is positive and the angular position of the rotor (measured in the anticlockwise direction starting from the right side of the axis A-B of Figure 1) is between 0 and 90 electrical degrees, the control signal 58 for the static switch (triac) 23, by closing the triac, applies the positive voltage to the main winding 3. In contrast, when the voltage signal 70 is negative and the angular position of the rotor is between 180° and 270°, the block 77 applies negative voltage to the winding 3 via the control signal 58 and the static switch 23. No voltage is applied to the main winding 3 during the other angular intervals.

The voltage signal 71 at the static switch 24 is compared in the block 83 with the angular position of the rotor R. When the voltage 71 is positive and the angular position of the rotor is between 90 and 180 electrical degrees, the signal 57 controlling the static switch (triac) 24 closes the triac to apply the positive voltage to the auxiliary winding 4. In contrast, when the voltage 71 is negative and the angular position of the rotor is between 270° and 360°, the block 83 applies the negative voltage to the winding 4 by means of the control signal 57. No voltage is applied to the auxiliary winding 4 during the other angular intervals (0°-90° and 180°-270°).

The control unit 69, shown in detail in Figure 3, can be constructed either with individual electronic components for each function or by executing the entire control algorithm on a microprocessor.

It is also possible to insert into the control blocks 77 and 83 the optimization algorithm for the applied voltage, described in patent application MI94A002635. Optimizing the applied voltage enables the quantity of active materials in the motor to be optimized, so reducing its costs, in that under any operating condition, with a variable feed voltage and/or a variable load, the motor receives from the electronic circuit a controlled voltage which maintains the current through the windings at minimum values, so reducing copper losses.

A further strong point of this invention is the processing and calculation updating of the angular position of the rotor starting from measurements of the said quantities 25, 70 and 71, effected at each moment in which the current in the windings is zero, ie when the static switches 23, 24 are open.

In this respect, when the triacs or static switches 23 and 24 present in the electronic circuit are not conducting, the current through the windings is zero and the signals 92 and 92' become zero, the signals 63 and 63' being the voltages induced only by the rotation and by the angular position of the rotor, the signal 25 representing the feed voltage.

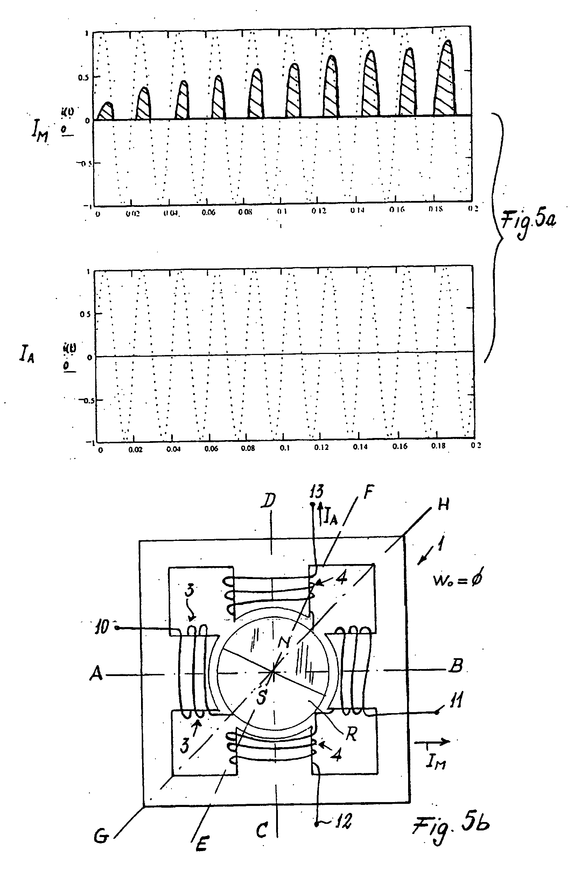

Comparing Figure 4 with Figure 3, it will be noted as a consequence that the current processing blocks 90, 90', 72, 72', 74, 74' have disappeared, as the current through the windings is zero and consequently the signals 73, 73', 75, 75' are also zero. The signals 37, 37' originating from the windings 3, 4 are merely due, as already mentioned in relation to the signals 63 and 63' of Figure 3, to the induced electromagnetic force caused by the position of the rotor R and by the rotational speed.

This calculation algorithm consequently introduces a new simplification. As a result, if the circuit formed with discrete components is used, it can be simplified and the number of components used be reduced. If a microprocessor is used, the algorithm requires less time for execution and less memory for the program.

To start the permanent-magnet rotor of the aforedescribed single-phase synchronous motor formed with two windings differing in phase by 90 electrical degrees and bring it to synchronism, the following should be noted:
- before starting, the rotor can be in any position and consequently initially there exists no information regarding the position of the rotor;
- the synchronous motor is unable to develop a static torque without using special procedures.

According to a particular important aspect of the invention, starting is based on four stages of the same algorithm, which are implemented one after another, by means of the aforedescribed arrangement which drives the two electronic switches 23, 24, each in series with one of the two motor windings 3, 4.
* The first stage is based on the forced positioning of the rotor R with the relative magnetic axis in a precise position.
* The second stage consists of initially starting the rotor R in a defined direction by applying suitable voltage (or current) pulses.
* The third stage, this being optional, is to apply a defined algorithm to cause the rotor R to rotate at a speed less than the synchronous speed if the load (for example a pump) requires initial stabilization at a lower r.p.m.
* The fourth stage is the final stage, in which the rotor R position signals are used as obtained directly from the voltage measurements on the two windings 3, to synchronize the rotor R with the mains frequency and to maintain it at the final synchronous rotation speed.

In the first three starting stages, no information is used regarding the rotor position, whereas in the fourth stage, as heretofore described (Figures 1 to 4), the voltage signals present across the windings 3, 4 are measured at the moments in which the static switches 23, 24 are open. These signals are consequently identified with the voltages induced by the effect of the rotation of the rotor R (of permanent-magnet type), their value being directly proportional to the speed of the rotor and to its position relative to the polar axes of the windings 3, 4.

### First stage.

To "park" the rotor R, ie to position its magnetic axis E―F (South--->North) in a desired and well defined position, the following algorithm is applied, it being implemented in the blocks 77, 83 and executed when the starter switch 100 (Figure 3) is closed. The implementation can be by a microprocessor.

With reference to Figure 5, the main winding 3 is acted upon, for example, to align the axis of the rotor R with the polar axis A-B to make current I_{M} pass through it in the direction indicated.

As the rotor R could have any initial position (magnetic axis E―F) small current pulses of increasing amplitude are given, either positive or negative, depending on how one wishes to align the rotor magnetic axis, by operating the static switch 23.

These current pulses, which at the beginning are of such an amplitude as not to move the rotor R, are incremented in amplitude with time until the point is reached at which it is certain that the necessary value exists to move the rotor R from its initial position to the set position, ie in which the magnetic axes A―B and E-F are aligned (see Figures 5a and 5b).

The torque applied to the rotor is slightly higher than the minimum necessary, so preventing excessive acceleration. In the example shown in Figure 5B, the rotor axis E-F becomes positioned along the axis A-B if only positive current pulses of increasing amplitude are applied to the main winding 3 (Figure 5a). After it begins to move towards the desired position, the rotor R has a tendency to accelerate and to continue its movement even when it has reached the position on the axis A-B.

For this reason the main winding 3 continues to be fed with always positive and increasingly larger current pulses (Figure 5a). In this respect, after the rotor has passed beyond the axis A-B, the current pulses, the previous purpose of which was to move it towards the axis A-B, are now required to brake its movement by attracting the rotor and stabilizing it in the final position.

The procedure enables the magnetic axis E-F of the rotor to be positioned in four main positions (A-B, B-A, C-D and D-C) and two auxiliary positions (G-H and H-G), ie the North pole of the rotor can face the following: one or other of the two pole pieces of axis A-B (positions A-B and B-A); one or other of the two pole pieces of axis C-D (positions C-D and D-C); or one or other of the intermediate positions between the pole pieces. In particular, by applying increasing positive current pulses to the main winding 3 (with flow direction I_{M} as in Figure 5b), the rotor R becomes parked in the position in which the rotor axis E-F is in alignment with the axis A―B.

Negative current pulses applied to the winding 3, but with the current flow direction the reverse of Figure 5b, position the rotor along the axis B-A. To align the rotor along the axis C-D, increasing positive current pulses must be applied to the auxiliary winding 4 with the flow direction of the current I as in Figure 5b. Negative pulses applied to the same auxiliary winding would align the rotor with the axis D-C. By simultaneously applying positive pulses to both the windings of Figure 5b, the rotor becomes positioned with an axis G-H at 45° to the axis A―B. Negative current pulses applied to both the windings would produce the opposite effect (alignment with axis H―G).

On termination of the first stage the following situation exists: the rotor R has its magnetic axis E-F aligned with the magnetic axis A-B, and its rotational speed is zero, ie the rotor R is absolutely still without any mechanical oscillation about its axis. This represents the initial condition for implementing the second starting stage.

### Second stage

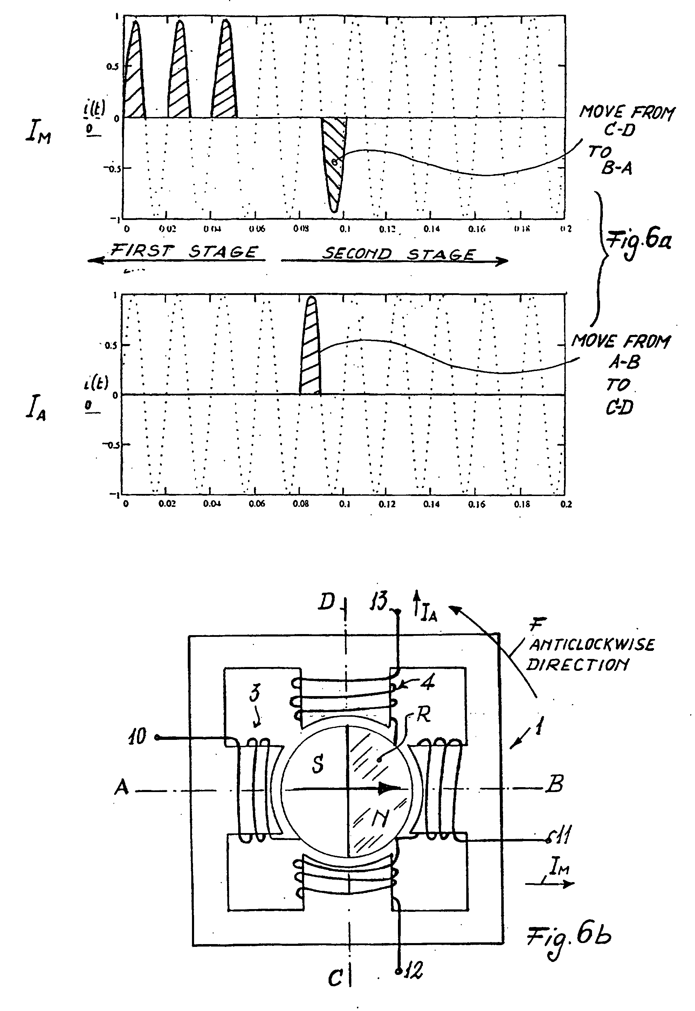

The second stage (Figures 6a, 6b) consists of applying suitable voltage pulses, current pulses or both to both the windings 3, 4 to cause the rotor R to begin to move in the chosen direction. As is well known, maximum torque acts on the rotor R when the stator magnetic flux is displaced through 90 electrical degrees from the rotor magnetic axis E-F. As there is a well defined situation at the end of the first stage, ie the angular position of the rotor is known, the rotor R can be started in the desired direction by. applying a current pulse sequence to both the windings 3, 4.

To supply, for example, maximum torque to the rotor when aligned with the axis A-B, a positive or negative current pulse I_{A} must be applied to the auxiliary winding 4 (see Figure 6a).

If it is desired to rotate the rotor R anticlockwise (arrow F in Figure 6b), the rotor axis E-F must be moved from the axis A―B ' towards the axis C-D; the maximum torque which accelerates the rotor in the direction of the axis C-D is obtained by applying a positive current pulse I_{A} of maximum amplitude to the auxiliary winding 4 (with reference to the direction of the current I_{A}, indicated in Figure 6B).

The torque supplied to the rotor is in this case the maximum available between stator and rotor and consequently, as a result of the applied current, acceleration of the rotor is achieved in the anticlockwise direction (arrow F).

The need to apply or not apply a second current pulse with the same polarity to the same winding 4 has to be evaluated on the basis of the particular application, the type of load or the inertia of the system.

In the case of pumps for household electrical appliances, as the pump load at low speed is negligible and as the system inertia is low, by applying only one current pulse the rotor can be moved through 90 electrical degrees in a time equal to the period of duration of the current pulse applied (Figure 6a).

On termination of the applied pulse I_{A}, a new situation can occur, ie the rotor has acquired a certain speed and rotates anticlockwise. The exact angular position of the rotor is unknown, even if it can be assumed that it lies around the axis C-D.

To stabilize the speed of the rotor R a second current pulse is then applied, the purpose of which is to angularly move the rotor magnetic axis from the position C-D to the new position B-A; this second current pulse I_{M} is negative and of maximum amplitude, and is applied to the main winding 3. This pulse performs two functions: it initially accelerates the rotor towards the axis B-A and then brakes it if it has acquired a speed such that the rotor magnetic axis E-F rotates beyond the magnetic axis A-B of the powered winding (main winding 4) before the current pulse has died out within the winding.

To rotate the rotor R clockwise the same aforesaid concept has to be used, but with the application of a negative current pulse of maximum amplitude to the auxiliary winding 4. This pulse shifts the rotor magnetic axis towards alignment with the axis D-C.

The next current pulse will be negative and be applied to the main winding.

For the continuation, the aforesaid concepts are used.

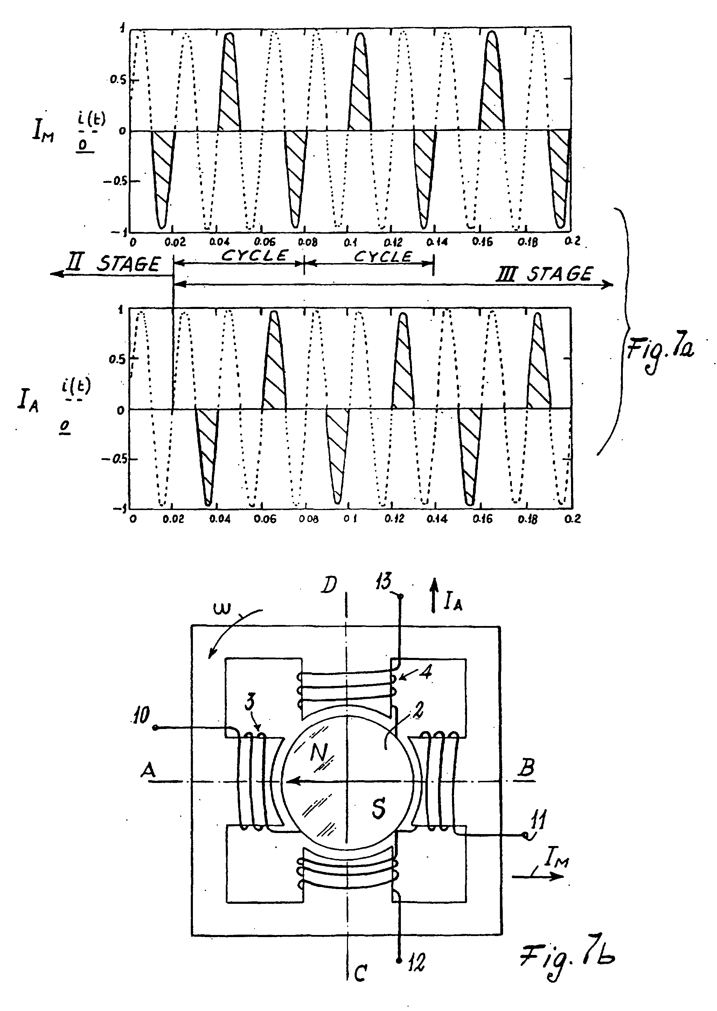

At the end of the second stage the rotor has a speed other than zero and rotates in the desired direction (ie anticlockwise in the example). In Figure 7b the rotor R rotates anticlockwise, the angular position of the rotor at the end of the second stage being around the axis B―A.

As the motor in question has a symmetrical air gap, there are no reluctance couples which could influence the rotor rotation and cause problems of change in the direction of rotation.

Hence for this motor, it can be said with certainty that at the end of the second stage the rotor has a certain speed, not however known, it is rotating anticlockwise and its axis lies around the axis B―A.

### Third stage (optional).

As is well known, a synchronous motor can also operate, in the sense of maintaining torque at the synchronism speed, in "open loop" (ie without feed-back) by applying current pulses to the windings without knowing the exact angular position of the rotor. This method of operation is possible only if there are no large variations in the load torque and consequently in the speed.

If the load is a pump for household electrical appliances, in which the load is fairly constant for a given rotational speed, it can be stated that the load oscillations, which are present but are of small extent, are compensated automatically by the effect of the intrinsic characteristics of the synchronous motor, so that the rotor continues to follow the speed set by the current pulses applied to the windings, ie it maintains the synchronism speed.

The most critical stage, ie the motor start, has been overcome by the application of the first two stages of this algorithm.

At the beginning of the third stage (Figures 7a, b) it is known that the angular position of the rotor is more or less around the axis B-A with a rotational speed other than zero. As the torque required to accelerate the rotor and to synchronize it at a speed less than the synchronous speed, which is related to the mains frequency, is much lower than the maximum torque which can be delivered by the motor in the case of pumps for household electrical appliances, the operation can proceed with the following algorithm. In practice the third stage begins, for anticlockwise rotation, when the negative current pulse I_{M} applied to the main winding 3 has died out (see the final part of the second stage).

To proceed in the same direction of rotation, ie anticlockwise, the next current pulse must urge the rotor towards the axis D-C, consequently this pulse must be of negative polarity and be applied to the auxiliary winding 4 (see Figure 7a). As, as can be seen from Figure 7a, the first negative current pulse I_{A} available for the auxiliary winding 4 appears after a half-period of the mains frequency from the end of the second stage, the rotor could undergo deceleration in the meantime.

As the electromagnetic torque which is applied to the rotor is a function of the angle between the magnetic axis (E-F) of the rotor and the polar axis of the energized winding, it will be apparent that, if at the moment of application of the negative current pulse to the winding 4 the rotor is decelerating, this angle is larger than for a situation of constant rotary motion, and hence the torque acting on the rotor to bring it to the axis D-C will be greater. Hence the more the rotor decelerates during this stage, the higher is the torque and consequently the acceleration applied by the current pulse. The next position into which the rotor is moved is the axis A-B.

As already described, to achieve this result a positive current pulse must be applied to the main winding 3. To proceed and bring the magnetic axis of the rotor into line with the axis C-D a positive current pulse must be applied to the auxiliary winding 4 (Figure 7). Again there occurs a possible deceleration stage, and consequently the aforegoing reasoning is applied. To perform a complete revolution starting from the position which the rotor occupied at the beginning of the third stage, the rotor must be brought into the angular position which it occupied at the beginning, ie into the position B-A.

As the pulse applied at the end of the second stage was a negative current pulse to the main winding 3, it will now be necessary to apply the same pulse to be then able to cyclically reapply the same procedure identified by the algorithm in the third stage.

In conclusion, for each revolution of the rotor (two pole motor as in the figures), four current pulses are required, two for each winding. This pulse sequence could be repeated ad infinitum to enable the motor to rotate with a speed of one third of the synchronism speed (three periods of the mains frequency to effect a complete revolution).

The accelerations and decelerations present within one cycle are damped by the inertia of the rotor, or rather of the entire system.

With the described procedure it is hence possible, in the case of need, to act on the motor and achieve a rotational speed less than the mains synchronism speed for a desired time period without using rotor position signals.

To rotate the rotor clockwise, starting from the end of the second stage, already achieved for this direction of rotation, the same algorithm is applied, but taking account of the necessary reversals of current pulses.

The aforedescribed algorithm is one of the possible algorithms enabling the rotor to be rotated with a speed representing a submultiple of the synchronism speed. In the described case four current pulses are applied to complete a cycle, ie 360 electrical degrees, the rotor rotating at one third of the synchronism speed.

One of the advantages deriving from the application of this algorithm is that the angular position of the rotor is known with good approximation at every instant.

The same concept is also applicable for other rotational speeds obtainable with a different number of current pulses for effecting one revolution.

The duration of the third starting stage is not fixed as it depends on the application, the type of load and the specific requirements. In the limit it could also not be applied, by jumping directly to the final stage, ie the fourth.

### Fourth stage

The fourth stage is entered having already a precise direction of rotation of the rotor and a speed which could be a submultiple of the synchronism speed. At this point one can proceed in two different ways, which however lead to the same result. The first is to use only one winding to synchronize the motor at mains frequency, the second being to use both windings 3, 4.

It is important to note that the windings 3, 4 are not identical, as the motor is a single-phase synchronous motor. The main winding 3 is designed for constant operating speeds, whereas the auxiliary winding 4 is generally designed to operate only during short starting periods.

As the drive torque can be generated by both windings, it should be noted that the auxiliary winding 4 is the dominant winding, ie the winding which provides a greater torque to the motor (as it generally expresses a greater magnetomotive force).

For this reason in both the aforesaid cases, when the motor is made to synchronize with the mains frequency, it synchronizes more because of the effect of the torque generated by the current pulses applied to the auxiliary winding 4 than because of the effect of those, if present, applied to the main winding 3, as these latter are weaker.

If it is chosen to use only one winding for the synchronization stage, it is apparent from the aforesaid that it is only the auxiliary winding 4 whcih is powered. In this respect the algorithm described in our preceding Italian patent application MI94A00941 is used, ie, for anticlockwise rotation positive current pulses are applied to the auxiliary winding 4 when the rotor lies with its magnetic axis within the 180° arc between the axis D-C and the axis C-D.

In contrast, negative current pulses are applied when the rotor magnetic axis lies within the 180° arc between the axis C-D and the axis D―C.

To perform this operation the angular position of the rotor R must be known. It is deduced in the already described manner from the voltages induced across the windings (Figures 1 to 4 and relative description).

On the basis of the data relative to the angular position of the rotor, the static switches 23, 24 are caused to conduct or not to conduct, in the aforestated manner (see signals 57 and 58).

The use of only the auxiliary winding 4 to synchronize the motor at mains frequency has the advantage that as the generated torque is stronger, the motor is able to reach synchronism speed even at a supply voltage less than the rated.

This means that the motor will possess a greater facility for synchronization under load, even if mains oscillations are present to reduce the applied voltage to the allowable tolerance limit.

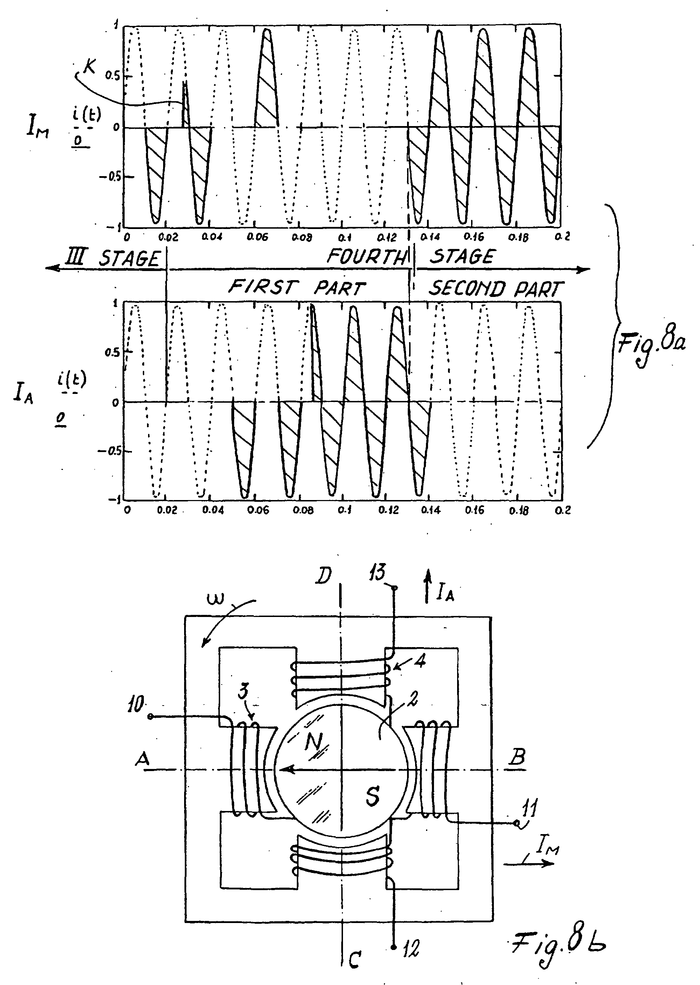

In the other possible case, instead of powering only the auxiliary winding 4, the main winding 3 is also powered. The algorithm used, again for anticlockwise rotation and with reference to Figure 8b, is identical in this case, however it must be noted that now both windings 3 and 4 may be powered, and consequently the electronic switches 23, 24 will be driven in relation to the position of the magnetic axis E-F of the rotor R in one of the four quadrants formed by the axes of the windings.

A positive current pulse is applied to the main winding 3 when the rotor magnetic axis E-F is in the quadrant formed by the axes C-D and B-A.

A positive current pulse is applied to the auxiliary 4 when the rotor magnetic axis is within the quadrant formed by the axes A-B and C-D, whereas a negative current pulse is applied thereto when the rotor magnetic axis is in the quadrant formed by the axes B-A and D-C.

Figure 8a shows the pulse sequence with reference to a rotor R which at the beginning of the fourth stage is rotating anticlockwise and of which the magnetic axis E-F has just passed beyond the axis B-A.

For the algorithm a negative pulse should be applied to the auxiliary winding 4, but the rotor has already passed for example beyond the axis D-C before the negative pulse becomes available from the mains, hence it now becomes necessary to apply a positive pulse to the main winding 3. In this respect, the moment of closure of the static switch 23 during the positive pulse period is visible in Figure 8a, at k.

The rotor continues to rotate, and having passed beyond the axis A-B a positive pulse must be applied to the auxiliary winding 4.

Once again, a positive polarity is not immediately available from the mains and consequently the rotor must be allowed to pass beyond the axis C-D, when a negative pulse must be applied to the main winding 3.

For the opposite direction of rotation the same procedure is applied, with suitable powering of the windings.

The algorithm which the two windings 3, 4 uses has in certain cases the advantage of bringing the rotor into synchronism within a much shorter time, and moreover is less sensitive to strong changes in applied torque.

In the case of pumps for household electrical appliances, as air bubbles can enter the pump during starting, strong torque variations effectively occur, it consequently being preferable to apply the second algorithm.

Again in this case the rotor synchronizes by the effect of torque generated by the dominant winding, ie the auxiliary winding 4.

For correct operation of the motor, whether it has been brought to synchronism speed with one or two windings during the first part of the fourth stage, synchronism must now be maintained by powering only the main winding 3, designed for this purpose, by definitively deactivating the auxiliary winding 4 until the next start.

The sequence of required operations is extremely important and is implemented after a suitable time period estimated as required to achieve synchronism. If the operations are not implemented in the manner described hereinafter, the motor could lose synchronism, especially if powered at low voltage.

As the two windings differ in phase by 90 electrical degrees and the rotor R is synchronized with respect to the auxiliary (dominant) winding 4 with a delay depending on the load angle, it is essential that the magnetic axis of the auxiliary winding 4 leads (by 90 electrical degrees) the magnetic axis A-B of the main winding, with the result that the magnetic axis E-F of the rotor R will lie between the two windings at the moment of transfer of power between the two windings.

This in fact ensures that the rotor is synchronized with the field generated by the main winding 3, in that once the dominant field of the auxiliary winding 4 has disappeared, the rotor R tends to instantaneously slow down, its magnetic axis E-F inevitably moving with a lag determined by the loading angle to the magnetic axis A-B of the main winding 3, and-remaining "hooked" thereto.

However to prevent such a sudden deceleration of the rotor, the algorithm (Figure 8a - beginning of second part) provides for simultaneously powering both the windings 3, 4 for a half-period of the mains frequency before transferring the power to the main winding 3, in order to generate a field with a magnetic axis intermediate between those of the two windings 3, 4 and hence closer to the magnetic axis E-F of the rotor.

If the described condition is not respected, ie if the magnetic axis of the main winding leads the magnetic axis of the auxiliary winding (and hence of the rotor), at the moment of transfer of power the rotor axis will have to accelerate suddenly under the pulse of a field which is weaker than that followed up to that moment, and this can result in loss of step.

Figure 8a shows the correct sequence which enables power to be transferred between the two windings without the risk of loss of step.

Once the rotor is synchronized with respect to the main winding 3, the motor operates at full r.p.m., synchronized at mains frequency.

At this point the starting algorithm ends.

In certain applications, in which the starting time is very short, the auxiliary winding can be dimensioned with a minimum copper quantity, so reducing motor cost.

## Claims

1. Method for starting and running, by means of an electronic circuit acting on static switches, a single-phase synchronous motor with a permanent-magnet rotor and two not necessarily equal windings differing in phase by 90 electrical degrees, particularly for operating circulation pumps for dishwashers or the like or for applications which require low power and involve low inertial loads, **characterised by** comprising three stages, consisting respectively of:
forcedly positioning the rotor (R) with its magnetic axis (E-F) in a given position;
initially starting the rotor (R) in a defined direction by applying electrical, voltage or current, pulses to it;
synchronizing the speed of the rotor (R) and maintaining it by measuring two electrical quantities represented by the feed voltage (25) of the motor (1) and the voltage (70, 71) at the static switches (23, 24).

2. A method as claimed in claim 1, wherein between the stage of initially starting the rotor in one direction and the synchronization stage there is. an intermediate stage in which the rotor (R) is rotated at a speed of less than the synchronism speed if the load requires initial stabilization at a lower r.p.m.

3. A method as claimed in claim 1, wherein this measurement, during running, takes place when the static switches are in their "open" state.

4. A method as claimed in claim 3, wherein the angular position of the rotor is determined on the basis of the voltage induced in the motor windings by the rotor flux.

5. An arrangement based on: a) a single-phase synchronous motor (1) with a permanent-magnet rotor (R) and two not necessarily equal windings (3, 4) differing in phase by 90 electrical degrees, particularly for operating circulation pumps for dishwashers or the like or for applications which require low power and involve low inertial loads, and b) an electronic circuit (69) for driving the motor via static switches (23, 24), **characterised in that** to start the motor (1) in a chosen direction, said electronic circuit (69) comprises means for forcedly positioning the rotor (R) with its magnetic axis (E-F) in a given position by acting on the static switches (23, 24), means for applying, by means of the static switches (23, 24), electrical voltage or current pulses to the motor for its initial starting in a defined direction, and means for synchronizing the rotor (R) and maintaining it synchronized by means of the static switches (23, 24) on the basis of its position signals obtained by measuring two electrical quantities represented by the feed voltage (25) of the motor (1) and the voltage (70, 71) at the static switches (23, 24).

6. An arrangement as claimed in claim 5, comprising means acting on the static switches for causing the rotor to rotate at a lower speed prior to its final synchronization.

7. An arrangement as claimed in claim 5 or in claims 5 and 6, wherein the said means which operate on the static switches are included in or comprise a microprocessor.

8. An arrangement as claimed in claim 5, wherein the electronic circuit measures the voltage induced in the windings by the rotor while running.

9. An arrangement as claimed in claim 5 or in claims 5 and 8, wherein the electronic circuit effects the measurement with the static switches "open".

10. An arrangement as claimed in at least one of claims 5 to 9, wherein the electronic circuit comprises a microprocessor.

11. A dishwasher circulation pump operated by the arrangement of claim 5 and by method of claim 1.

## Patentansprüche

1. Verfahren zum Starten und Betreiben, mit Hilfe einer elektronischen Schaltung, die statische Schalter ansteuert, eines Einphasen-Synchronmotors mit einem Permanentmagnet-Rotor und zwei nicht notwendigerweise gleichen Wicklungen, die eine elektrische Phasendifferenz von 90 Grad haben, und insbesondere zum Betreiben von Zirkulationspumpen für Geschirrspüler oder ähnliches oder für Anwendungen, die wenig Leistung benötigen und geringe Trägheitslasten haben, **gekennzeichnet durch** drei Schritte, die jeweils beinhalten:
erzwungenes Positionieren des Rotors (R) mit seiner magnetischen Achse (E-F) in einer bestimmten Position;
anfängliches Starten des Rotors (R) in einer definierten Richtung, indem diesem elektrische Spannung oder Strom zugeführt wird;
Synchronisieren der Geschwindigkeit des Rotors (R) und deren Aufrechterhaltung **durch** Messen von zwei elektrischen Größen, die **durch** die Speisespannung (25) des Motors (1) und die Spannung (70, 71) an den statischen Schaltern (23, 24) wiedergegeben sind.

2. Verfahren nach Anspruch 1, bei dem zwischen dem Schritt des anfänglichen Startens des Rotors in einer Richtung und dem Schritt des Synchronisierens ein Zwischenschritt vorgesehen ist, bei dem der Rotor (R) mit einer Geschwindigkeit gedreht wird, die kleiner ist als die Synchronisationsgeschwindigkeit, wenn die Last eine anfängliche Stabilisierung mit einer geringen Umdrehungszahl pro Minute erfordert.

3. Verfahren nach Anspruch 1, bei dem diese Messung, während des Betreibens, dann stattfindet, wenn sich die statischen Schaltungen in ihrem "offenen" Zustand befinden.

4. Verfahren nach Anspruch 3, bei dem die Winkelposition des Rotors auf der Basis der Spannung bestimmt wird, die in den Motorwicklungen durch den Rotorfluss induziert wird.

5. Vorrichtung, die basiert auf: a) einem Einphasen-Synchronmotor (1) mit einem Permanentmagnet-Rotor (R) und zwei nicht notwendigerweise gleichen Wicklungen (3, 4), die eine elektrische Phasendifferenz von 90 Grad haben, insbesondere zum Betreiben von Zirkulationspumpen für Geschirrspüler oder ähnliches oder für Anwendungen, die wenig Leistung benötigen und geringe Trägheitslasten haben, und b) einer elektronischen Schaltung (69) zum Ansteuern des Motors über statische Schalter (23, 24),
**dadurch gekennzeichnet, dass** die elektronischen Schaltung (69) zum Starten des Motors (1) in einer gewählten Richtung aufweist: Einrichtung, um ein Positionieren des Rotors (R) mit seiner magnetischen Achse (E-F) in einer bestimmten Position zu erzwingenen, indem die statischen Schalter (23, 24) angesteuert werden, Einrichtungen zum Zuführen, mit Hilfe der statischen Schalter (23, 24), von elektrischen Spannungs- oder Stromimpulsen zu dem Motor für dessen anfängliches Starten in einer definierten Richtung, und Einrichtungen zum Synchronisieren des Rotors (R) und zum Aufrechterhalten der Synchronisation mit Hilfe der statischen Schalter (23, 24) auf der Basis von dessen Positionssignalen, die durch Messen von zwei elektrischen Größen erhalten werden, die durch die Speisespannung (25) des Motors (1) und die Spannung (70, 71) an den statischen Schaltern (23, 24) wiedergegeben sind.

6. Vorrichtung nach Anspruch 5, mit Einrichtungen, die die statischen Schalter ansteuern, um zu bewirken, dass sich der Rotor vor seiner endgültigen Synchronisation mit einer geringeren Geschwindigkeit dreht.

7. Vorrichtung nach Anspruch 5 oder nach Ansprüchen 5 und 6, bei der die Einrichtungen, durch die die statischen Schalter angesteuert werden, in einem Mikroprozessor enthalten sind oder einen solchen beinhalten.

8. Vorrichtung nach Anspruch 5, bei der die elektronische Schaltung die Spannung misst, die in den Wicklungen durch den rotierenden Rotor induziert wird.

9. Vorrichtung nach Anspruch 5 oder nach Ansprüchen 5 und 8, bei der die elektronische Schaltung das Messen bewirkt, wenn die statischen Schalter "geöffnet" sind.

10. Vorrichtung nach zumindest einem der Ansprüche 5 bis 9, bei der die elektronische Schaltung einen Mikroprozessor beinhaltet.

11. Geschirrspüler-Zirkulationspumpe, die durch eine Vorrichtung nach Anspruch 5 und durch ein Verfahren nach Anspruch 1 betrieben wird.

## Revendications

1. Procédé pour faire démarrer et fonctionner, par l'intermédiaire d'un circuit électronique agissant sur des commutateurs statiques, un moteur synchrone monophasé ayant un rotor à aimant permanent et deux enroulements pas nécessairement égaux qui sont différents en termes de phase de 90 degrés électriques, en particulier pour faire fonctionner des pompes de circulation pour des lave-vaisselle ou analogue ou pour des applications qui nécessitent une faible puissance et impliquent de faibles charges inertielles, **caractérisé en ce qu'**il comporte trois stades, consistant respectivement à:
positionner de manière forcée le rotor (R) avec son axe magnétique (E-F) à une position donnée,
faire démarrer initialement le rotor (R) dans une direction définie en appliquant des impulsions électriques, de tension ou de courant, à celui-ci,
synchroniser la vitesse du rotor (R) et la maintenir en mesurant deux quantités électriques représentées par la tension d'alimentation (25) du moteur (1) et la tension (70, 71) au niveau des commutateurs statiques (23, 24).

2. Procédé selon la revendication 1, dans lequel entre le stade de démarrage initial du rotor dans une direction et le stade de synchronisation, il existe un stade intermédiaire dans lequel le rotor (R) est mis en rotation à une vitesse inférieure à la vitesse de synchronisation si la charge nécessite une stabilisation initiale a une valeur t.p.m. inférieure.

3. Procédé selon la revendication 1, dans lequel cette mesure, pendant le fonctionnement, a lieu lorsque les commutateurs statiques sont dans leur état "ouvert".

4. Procédé selon la revendication 3, dans lequel la position angulaire du rotor est déterminée sur la base de la tension induite dans les enroulements du moteur par le flux du rotor.

5. Equipement basé sur : a) un moteur synchrone monophasé (1) ayant un rotor à aimant permanent (R) et deux enroulements pas nécessairement égaux (3, 4) différents en termes de phase de 90 degrés électriques, en particulier pour faire fonctionner des pompes de circulation pour lave-vaisselle ou analogue ou pour des applications qui nécessitent une faible puissance et impliquent de faibles charges inertielles, et b) un circuit électronique (69) pour entraîner le moteur via des commutateurs statiques (23, 24), **caractérisé par** le démarrage du moteur (1) dans une direction choisie, ledit circuit électronique (69) comporte des moyens pour positionner de manière forcée le rotor (R) avec son axe magnétique (E-F) à une position donnée en agissant sur les commutateurs statiques (23, 24), des moyens pour appliquer, par l'intermédiaire des commutateurs statiques (23, 24) des impulsions électriques, de tension ou de courant au moteur pour son démarrage initial dans une direction définie, et des moyens pour synchroniser le rotor (R) et le maintenir synchronisé par l'intermédiaire des commutateurs statiques (23, 24) sur la base de ses signaux de position obtenus en mesurant deux quantités électriques représentées par la tension d'alimentation (25) du moteur (1) et la tension (70, 71) au niveau des commutateurs statiques (23, 24).

6. Equipement selon la revendication 5, comportant des moyens agissant sur les commutateurs statiques pour amener le rotor à tourner à une vitesse inférieure avant sa synchronisation finale.

7. Equipement selon la revendication 5 ou selon les revendications 5 et 6, dans lequel lesdits moyens qui agissent sur les commutateurs statiques sont inclus dans un microprocesseur, ou comportent un microprocesseur.

8. Equipement selon la revendication 5, dans lequel le circuit électronique mesure la tension induite dans les enroulements par le rotor pendant que celui-ci fonctionne.

9. Equipement selon la revendication 5 ou selon les revendications 5 et 8, dans lequel le circuit électronique effectue la mesure avec les commutateurs statiques "ouverts".

10. Equipement selon l'une quelconque des revendications 5 à 9, dans lequel le circuit électronique comporte un microprocesseur.

11. Pompe de circulation pour lave-vaisselle actionnée par l'équipement selon la revendication 5 et par le procédé selon la revendication 1.
